# FASCICULE DE BREVET EUROPEEN

(11) **EP 2 148 478 B1**
(45) Date de publication et mention de la délivrance du brevet: **21.12.2011**
(21) Numéro de dépôt: 09165737.9
(22) Date de dépôt: 17.07.2009
(51) Int. Cl.: H04L 12/56

(54) **Méthode d'ordonnancement de paquets**
Paketanordnungsmethode
Packet sequencing method

(30) Priorité: 21.07.2008 FR 0854930
(43) Date de publication de la demande: 27.01.2010
(73) Titulaire: Commissariat à l'Énergie Atomique et aux Énergies Alternatives, 75015 Paris (FR)
(72) Inventeur: Calvanese Strinati, Emilio, 38000 Grenoble (FR); Ktenas, Dimitri, 38600 Fontaine (FR)
(74) Mandataire: Augarde, Eric

(56) Documents cités:
- VINAY K ET AL: "Performance Evaluation of End-to-end Delay by Hybrid Scheduling Algorithm for QoS in IEEE 802.16 Network" WIRELESS AND OPTICAL COMMUNICATIONS NETWORKS, 2006 IFIP INTERNATIONAL CONFERENCE ON BANGALORE, INDIA 11-13 APRIL 2006, PISCATAWAY, NJ, USA,IEEE, 11 avril 2006 (2006-04-11), pages 1-5, XP010933174 ISBN: 978-1-4244-0340-0
- HOAI HOANG ET AL: "Switched real-time ethernet with earliest deadline first scheduling protocols and traffic handling" PARALLEL AND DISTRIBUTED PROCESSING SYMPOSIUM., PROCEEDINGS INTERNATIO NAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15 avril 2002 (2002-04-15), pages 94-99, XP010591129 ISBN: 978-0-7695-1573-1

## Description

### DOMAINE TECHNIQUE

La présente invention concerne une méthode d'ordonnancement de paquets, en particulier pour un système de télécommunication sans-fil multi-accès.

### ÉTAT DE LA TECHNIQUE ANTÉRIEURE

Les systèmes de télécommunication multi-accès permettent de partager des ressources de transmission entre différents utilisateurs de manière à fournir à chacun d'entre eux un canal de transmission distinct.

On connaît notamment les techniques de TDMA (*Time Division Multiple Access*), FDMA (*Frequency Division Multiple Access*) et CDMA (*Code Division Multiple Access*) allouant respectivement aux différents utilisateurs des intervalles de temps, des fréquences/ intervalles de fréquence, ou des codes d'accès. Il est également classique de combiner entre elles ces techniques de contrôle d'accès. Par exemple, un système OFDMA (*Orthogonal Frequency Division Multiplexing Access*) combine un accès par répartition de fréquences (FDMA) et un accès par répartition d'intervalles de temps (TDMA). Dans un tel système chaque utilisateur se voit attribuer dynamiquement pour chaque intervalle de temps un ensemble de sous-porteuses (chunk) d'un multiplex OFDM sur lesquelles il peut transmettre ses données.

Dans certains cas le système de télécommunication offre une pluralité de services, par exemple des services temps réel comme la voix sur IP (VoIP) et/ou des services de transfert de données présentant des profils de qualité de service (QoS) différents. Le système de contrôle d'accès peut alors également permettre aux différents services d'un utilisateur d'accéder aux ressources de transmission.

Le contrôle d'accès peut être effectué en allouant des ressources dédiées à chaque utilisateur. Alternativement, les paquets de données de différents utilisateurs et/ou de différents services entrent en compétition pour accéder à des ressources de transmission communes. Par exemple, dans un système de télécommunication cellulaire, la station de base peut partager des intervalles de temps (*time slots*), des fréquences et/ou des séquences d'étalement spectral pour transmettre des paquets de données à destination des différents utilisateurs ou UEs (*User Equipments*) voire à différents services.

L'ordre selon lequel les différents utilisateurs ou services ont accès à la ressource est déterminé par un ordonnanceur de paquets.

Plusieurs méthodes d'ordonnancement de paquets sont connues de l'état de la technique. Par exemple, la méthode dite MCI (*Maximum Channel to Interference ratio* ou Max C/I) ou la méthode dite PF (*Proportional Fairness*) font toutes deux appel à une surveillance de l'état du canal (*Channel State Monitoring*). La première méthode attribue à chaque intervalle de transmission la ressource à l'utilisateur ou aux utilisateurs ayant le meilleur état de canal, pour obtenir un débit total instantané maximal. La seconde permet de réaliser un équilibre entre un critère de maximum de débit et un critère d'équité entre les différents utilisateurs : elle garantit qu'un utilisateur, ayant en moyenne un meilleur état de canal que les autres, atteigne sur le long terme un débit moyen plus élevé.

Les deux méthodes d'ordonnancement précitées (MCI, PF) ne prennent toutefois pas en considération les contraintes de qualité de service (QoS) des différents utilisateurs. De manière générale, on entend ici par qualité de service, une caractéristique d'un certain niveau de performance d'un flux de données, telle qu'un débit binaire, un taux d'erreur binaire ou paquet, un temps maximal de latence ou de gigue. La méthode d'ordonnancement MCI peut en outre conduire à ce qu'un utilisateur n'ayant pas un bon état de canal sur une certaine période de temps se voit interdire l'accès à la ressource pendant toute cette période (*user starvation*).

Certaines méthodes d'ordonnancement de paquets ont été proposées pour tenter de respecter des contraintes spécifiques de qualité de service. Par exemple, la méthode d'ordonnancement dite EDF (*Earliest Deadline First*) prend en compte les contraintes temps réel requises par certaines applications (VoIP ou videostreaming par exemple) en attribuant une priorité d'autant plus grande à un paquet que son échéance d'envoi est proche. Un algorithme d'ordonnancement de paquets de type EDF est décrit dans le brevet US-B-230923.

La méthode d'ordonnancement EDF présente toutefois l'inconvénient de ne pas maximiser le débit total instantané, puisque sa métrique de décision ne pend pas en compte d'information sur l'état du canal, ni d'offrir de solution de compromis satisfaisante en cas de surcharge du système.

Une méthode d'ordonnancement de paquets prenant en compte à la fois les contraintes temps réel des flux ainsi que la maximisation du débit total instantané des utilisateurs a été proposée dans l'article de M. Andrews et al. intitulé « Providing quality of service over a shared wireless link » publié dans IEEE Communications Magazine, vol. 39, N° 2, Février 2001, pp 150-154. Cette méthode d'ordonnancement connue sous l'acronyme MLWDF (*Modified Largest Weighted Deadline First*) garantit que le retard de transmission du paquet est inférieur à une valeur de seuil avec un certain degré de probabilité.

La méthode MLWDF permet de traiter dans un même système des flux soumis à une contrainte temps réel, dits flux RT (*Real Time*), ainsi que des flux non soumis à une telle contrainte, dits flux NRT (*Non Real Time*). Toutefois, l'implémentation pratique de la méthode MLWDF s'avère délicate car le choix des paramètres (seuils de retard, seuils de débit) peut sensiblement affecter les performances du système.

Une autre méthode d'ordonnancement capable de prendre en charge à la fois les flux RT et les flux NRT a été décrite dans l'article de S. Ryu et al. intitulé « Urgency and efficiency based packet scheduling algorithm » publié dans Proceedings of the Int'l Conf. On Communications, 2005, vol. 4, pp. 2279-2785. Cette méthode, connue sous l'acronyme UEPS (*Urgency and Efficiency* based *Packet Scheduling*), a été proposée dans le cadre d'un système OFDMA. Elle met en oeuvre une règle d'ordonnancement de paquets basée sur des fonctions d'utilité dépendant des caractéristiques du trafic et de l'ensemble des utilisateurs actifs à un moment donné dans le réseau. Là encore, le choix des fonctions d'utilité conditionne fortement l'efficacité du système.

Un autre méthode d'ordonnancement de paquets est proposée dans le document "IEEE 802.16 based last mile broadband wireless military networks with quality of service support" XP010699282. La méthode prend en compte les contraintes temps réel des flux en classant les paquets dans des catégories urgents et non-urgents. Les paquets de chaques catégories font ensuite l'objet d'ordonnancements respectifs.

Le but de la présente invention est de proposer une méthode d'ordonnancement de paquets pour un système de télécommunication multi-accès, capable de traiter à la fois les flux RT et NRT des utilisateurs, offrant de meilleures performances en termes de satisfaction de charge de trafic tout en étant moins sensible à un choix de paramètres que celles de l'état de la technique.

### EXPOSÉ DE L'INVENTION

La présente invention est définie par une méthode d'ordonnancement de paquets dans un système de télécommunication multi-accès partageant une pluralité de ressources de transmission. Les paquets relatifs aux différents accès sont classés dans une première catégorie de paquets urgents (*Qᵤ*) et dans une seconde catégorie de paquets non-urgents (*Q*_{*n*_*u*}), les paquets de la première catégorie faisant l'objet d'un premier ordonnancement et d'une allocation desdites ressources selon ce premier ordonnancement, puis les paquets de la seconde catégorie faisant l'objet d'un second ordonnancement et d'une allocation des ressources restantes selon ce second ordonnancement.

Selon une première variante, on attribue un caractère urgent ou non-urgent à des classes de service des différents utilisateurs, un paquet étant classé dans la première catégorie si la classe à laquelle il appartient est de caractère urgent et dans la seconde catégorie sinon.

Selon une seconde variante, un paquet est classé dans la première catégorie si son temps de vie (TTL) est inférieur à une valeur de seuil (*Th*) prédéterminée. Avantageusement, des valeurs de seuil différentes (*Th*₁,...*Th_{N}*) sont prévues pour différentes classes de service des utilisateurs du système, un paquet appartenant à une classe de service (*Cₙ*) étant classé dans la première catégorie si son temps de vie (TTL) est inférieur à la valeur de seuil associée à cette classe.

Selon une troisième variante, un paquet est classé dans la première catégorie s'il appartient à un flux dont le débit moyen calculé sur une fenêtre temporelle est supérieur à une valeur de seuil *(R_{Th})* prédéterminée.

Selon un premier mode de réalisation, les premier et second ordonnancements sont effectués selon une même méthode d'ordonnancement de paquets.

Ladite méthode d'ordonnancement peut être alors du type « *Maximum Channel to Interference ratio* » ou du type *« Proportional Fairness* ».

Selon un second mode de réalisation, les premier et second ordonnancements sont effectués selon des méthodes d'ordonnancement de paquets distinctes.

Le premier ordonnancement peut alors être effectué selon une méthode d'ordonnancement de type « *Earliest Deadline First* » et le second ordonnancement selon une méthode d'ordonnancement du type *« Maximum Channel to Interference ratio* ».

Alternativement, le premier ordonnancement peut être effectué selon une méthode d'ordonnancement de type « *Earliest Deadline First* » et le second ordonnancement selon une méthode d'ordonnancement du type « *Proportional Fairness* ».

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1 représente schématiquement une méthode d'ordonnancement de paquets selon l'invention ;
La Fig. 2A illustre les performances respectives de méthodes d'ordonnancement connues et d'une méthode d'ordonnancement selon l'invention dans un premier type de scénario ;
La Fig. 2B illustre les performances respectives de méthodes d'ordonnancement connues et d'une méthode d'ordonnancement selon l'invention dans un second type de scénario.

### EXPOSÉ DÉTAILLÉ DE MODES DE RÉALISATION PARTICULIERS

Nous nous plaçons à nouveau dans le cadre d'un système de télécommunication multi-accès où une pluralité d'utilisateurs et/ou d'applications ont accès à des ressources de transmission communes. Un exemple typique d'utilisation de l'invention est celui d'un système OFDMA où les ressources sont constituées, à chaque intervalle de transmission (TTI), par des intervalles de sous-porteuses (*frequency chunks*). Toutefois la présente invention peut s'appliquer de manière générale à tout système de télécommunication multi-accès partageant entre les différents accès des ressources de transmission, et dans lequel, pour chaque accès, les données sont transmises sous forme de paquets.

L'idée à la base de la présente invention est de classer les différents paquets en une première catégorie correspondant aux paquets urgents et une seconde catégorie correspondant aux paquets non urgents, les paquets de la première catégorie étant prioritaires par rapport à ceux de la seconde catégorie. Les paquets appartenant à la première catégorie font l'objet d'un premier ordonnancement et se voient allouer des ressources de transmission dans l'ordre selon lequel ils ont été ordonnancés. Les paquets appartenant à la seconde catégorie font ensuite l'objet d'un second ordonnancement et se voient attribuer les ressources non déjà allouées dans l'ordre selon lequel ils ont été à leur tour ordonnancés.

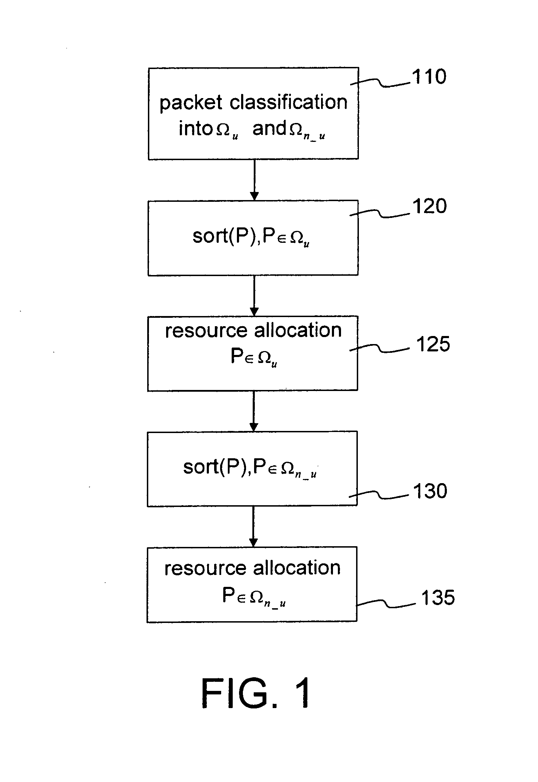

La Fig. 1 représente schématiquement une méthode d'ordonnancement de paquets selon l'invention.

Les paquets relatifs aux différents accès, c'est-à-dire les paquets des ou à destination des différents utilisateurs et/ou relevant de différents services sont classés dans la première et la seconde catégories désignées respectivement par Ω*ᵤ* et Ω_{*n*_*u*} à l'étape 110.

Le classement des paquets dans les deux catégories précitées peut être effectué de différentes manières. Par exemple, le système peut attribuer d'office à une certaine classe de service un caractère « urgent ». Par la suite, tous les paquets appartenant à un tel service hériteront du caractère « urgent » et seront classés dans la première catégorie. De la même façon, certaines classes de service peuvent d'emblée être considérées comme n'ayant pas de caractère d'urgence. Dans ce cas, tous les paquets relevant d'un tel service seront classés d'office dans la seconde catégorie.

Un autre type de classement opère directement sur les paquets. Par exemple les paquets peuvent être classés en fonction de leurs durées de vie respectives ou TTL (*Time To Live*). Plus précisément, un paquet appartiendra à la première catégorie si sa durée de vie est inférieure à un seuil prédéterminé *Th* et appartiendra à la seconde catégorie sinon. De manière plus générale, on pourra prévoir différentes valeurs de seuils *Th*₁,..,*Th_{N}* pour différentes classes de service *C*₁,...,*C_{N}*, un paquet de classe *Cₙ* appartiendra à la première catégorie si sa durée de vie est telle que *TTL ≤ Thₙ* et appartiendra à la seconde catégorie sinon.

Le seuil *Th* ou les différents seuils *Th*₁,..,*Th_{N}* pourra/pourront être exprimé(s) en termes de pourcentage(s) de la valeur TTL maximale. Le seuil *Th* pourra aussi être déterminé de manière adaptative ou non à partir d'un histogramme des valeurs TTL des différents paquets. Dans le cas où plusieurs seuils *Th*₁,..,*Th_{N}* sont prévus pour différentes classes de service, ces seuils peuvent être obtenus de manière similaire par des histogrammes de valeurs TTL dans ces différentes classes.

Un autre type de classement fait appel au débit moyen du flux auquel appartient le paquet. Plus précisément, si un flux présente un débit moyen, calculé sur une fenêtre temporelle, supérieur à une valeur de seuil, *R_{Th},* prédéterminée, un paquet appartenant à ce flux sera classé dans la première catégorie.

A l'étape 120, on ordonne les paquets de Ω*ᵤ* et on leur alloue les ressources de transmission en 125 selon cet ordonnancement. A l'étape 130, on ordonne les paquets de Ω_{*n*_*u*} et on leur alloue les ressources de transmission non encore allouées en 135.

L'ordonnancement des paquets de la première catégorie et celui des paquets de la seconde catégorie peuvent être effectués selon des méthodes d'ordonnancement identiques ou distinctes.

Selon un premier mode de réalisation, les deux méthodes d'ordonnancement sont identiques pour les deux catégories de paquets. Par exemple on utilisera une méthode d'ordonnancement ne prenant pas en compte la qualité de service, telle que la méthode MCI ou PF.

Selon un second mode de réalisation, les deux méthodes d'ordonnancement sont choisies distinctes. Pour les paquets de la première catégorie, on optera avantageusement pour une méthode d'ordonnancement ne prenant en compte que la contrainte temps réel, par exemple la méthode EDF. Ainsi, parmi les paquets considérés comme urgents, une hiérarchie de l'urgence sera prise en compte dans l'ordonnancement. A *contrario,* pour les paquets de la seconde catégorie on pourra avantageusement opter pour une méthode d'ordonnancement visant à maximiser le débit total (*maximum throughput*) du système indépendamment des contraintes de qualité de service, par exemple une méthode MCI ou PF.

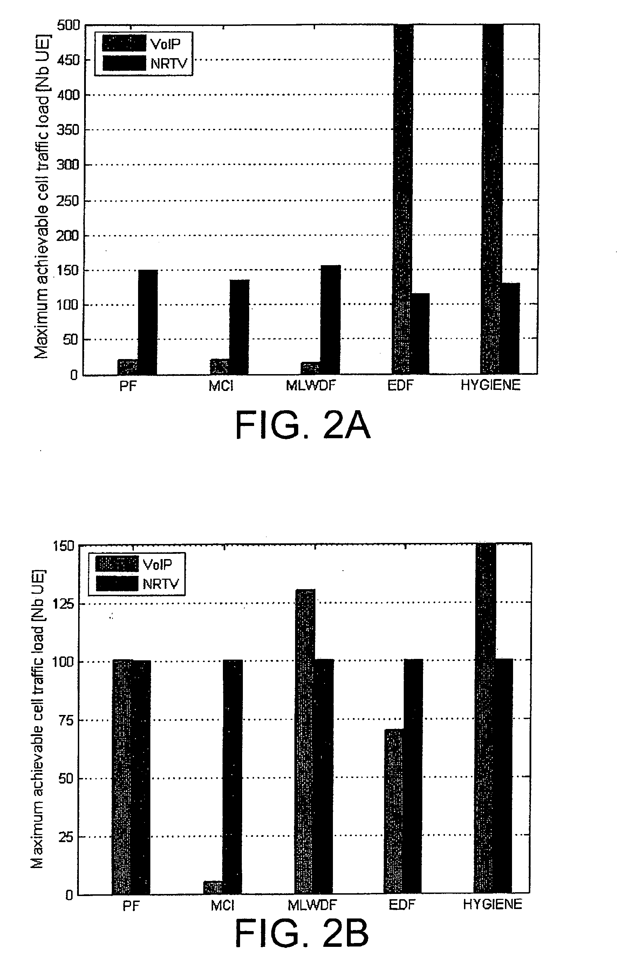

Les Figs. 2A et 2B permettent de comparer les performances respectives des méthodes PF, MCI, MLWDF, EDF et une méthode d'ordonnancement selon la présente invention (désignée par l'acronyme HYGIENE), pour deux scénarii différents. Dans le cas illustré, la méthode d'ordonnancement correspond au second mode de réalisation avec une méthode EDF pour les paquets de la première catégorie et une méthode MCI pour les paquets de la seconde catégorie. Le seuil *Th* a été fixé à 40 ms.

Le système de télécommunication multi-accès envisagé ici est un système cellulaire comportant une station de base et une pluralité d'équipements d'utilisateurs (UEs) distribués aléatoirement et uniformément dans la cellule. Pour chaque utilisateur, le flux de données est de type temps réel (RT) ou non (NRT).

Dans le premier scénario, on a supposé que les flux de données des utilisateurs de la cellule pouvaient n'être que d'un seul type temps réel, à savoir, dans le cas illustré, soit de la voix sur IP (VoIP), soit de la vidéo quasi temps réel (NRTV ou *Near Real Time Video*)*.*

Dans le second scénario, on a supposé qu'au sein de la cellule pouvaient coexister des flux de données temps réel de types différents, à savoir, dans le cas illustré, des flux VoIP et NRTV. En d'autres termes le trafic temps réel au sein de la cellule est mixte : VoIP ou NRTV.

Les Figs. 2A et 2B indiquent la charge de trafic maximale de la cellule, libellée en nombre d'utilisateurs, pour les méthodes d'ordonnancement PF, MCI, MLWDF, EDF et la méthode d'ordonnancement selon l'invention (HYGIENE). Plus précisément, la charge maximale de la cellule est définie comme le nombre maximal utilisateurs tel que 95% des utilisateurs soient satisfaits, un utilisateur de service VoIP ou de service NRTV étant considéré comme satisfait si son taux d'erreurs paquet est inférieur à 2% et si le temps de transfert dans l'ordonnanceur est respectivement inférieur à 50 ms et 100 ms. Les résultats ont été moyennés sur 100 simulations indépendantes, chaque simulation comportant un tirage aléatoire des positions des équipements suivi de 100 secondes d'activité du réseau. A chaque nouvel intervalle de transmission (TTI) on effectue un nouveau tirage des caractéristiques des canaux de transmission des différents utilisateurs.

La Fig. 2A montre que pour des utilisateurs de service VoIP, la charge maximale de trafic dans la cellule est obtenue avec la méthode EDF et la méthode selon l'invention. En revanche, des utilisateurs de service NRTV, les différences de performance entre les différentes méthodes d'ordonnancement sont relativement faibles, le plus faible résultat étant obtenu avec la méthode EDF.

La Fig. 2B montre que si dans la cellule se trouvent à la fois des utilisateurs de service NRTV (fixé ici à 100) et des utilisateurs de service VoIP, la charge maximale de trafic dans la cellule est obtenue avec la méthode selon l'invention. Le plus faible résultat est en revanche obtenu avec la méthode d'ordonnancement MCI.

## Revendications

1. Méthode d'ordonnancement de paquets dans un système de télécommunication multi-accès partageant une pluralité de ressources de transmission, dans laquelle :
- les paquets relatifs aux différents accès sont classés (110) dans une première catégorie de paquets urgents (*Qᵤ*) et dans une seconde catégorie de paquets non-urgents (*Q_{n_u}*), un paquet étant classé dans la première catégorie s'il appartient à un flux dont le débit moyen calculé sur une fenêtre temporelle est supérieur à une valeur de seuil (*R_{Th}*) prédéterminée et dans la seconde catégorie sinon ;
- les paquets de la première catégorie font l'objet d'un premier ordonnancement (120) et d'une allocation des dites ressources selon ce premier ordonnancement (125), puis les paquets de la seconde catégorie font l'objet d'un second ordonnancement (130) et d'une allocation des ressources restantes selon ce second ordonnancement (135).

2. Méthode d'ordonnancement de paquets dans un système de télécommunication multi-accès partageant une pluralité de ressources de transmission, dans laquelle :
- les paquets relatifs aux différents accès sont classés (110) dans une première catégorie de paquets urgents (*Qᵤ*) et dans une seconde catégorie de paquets non-urgents (*Q*_{*n*_*u*}), un paquet étant classé dans la première catégorie si son temps de vie (TTL) est inférieur à une valeur de seuil (*Th*) prédéterminée et dans la seconde catégorie sinon ;
- les paquets de la première catégorie font l'objet d'un premier ordonnancement (120) et d'une allocation des dites ressources selon ce premier ordonnancement (125), puis les paquets de la seconde catégorie font l'objet d'un second ordonnancement (130) et d'une allocation des ressources restantes selon ce second ordonnancement (135).

3. Méthode d'ordonnancement selon la revendication 2, **caractérisée en ce que** des valeurs de seuil différentes (*Th*₁,...,*Th_{N}*) sont prévues pour différentes classes de service des utilisateurs du système, un paquet appartenant à une classe de service (*Cₙ*) étant classé dans la première catégorie si son temps de vie (TTL) est inférieur à la valeur de seuil associée à cette classe.

4. Méthode d'ordonnancement selon l'une des revendications précédentes, **caractérisée en ce que** les premier et second ordonnancements sont effectués selon une même méthode d'ordonnancement de paquets.

5. Méthode d'ordonnancement selon la revendication 4, **caractérisé en ce que** ladite même méthode d'ordonnancement est du type « *Maximum Channel to Interference ratio* » ou du type « *Proportional Fairness* »

6. Méthode d'ordonnancement selon l'une des revendications 1 à 3, **caractérisée en ce que** les premier et second ordonnancements sont effectués selon des méthodes d'ordonnancement de paquets distinctes.

7. Méthode d'ordonnancement selon la revendication 6, **caractérisée en ce que** le premier ordonnancement est effectué selon une méthode d'ordonnancement de type « *Earliest Deadline First* » et que le second ordonnancement est effectué selon une méthode d'ordonnancement du type « *Maximum Channel to Interference ratio* ».

8. Méthode d'ordonnancement selon la revendication 6, **caractérisée en ce que** le premier ordonnancement est effectué selon une méthode d'ordonnancement de type « *Earliest Deadline First* » et que le second ordonnancement est effectué selon une méthode d'ordonnancement du type *« Proportional Fairness* ».

## Claims

1. Method of scheduling packets in a multi-access telecommunication system sharing a plurality of transmission resources, **characterized in that**
- the packets relating to the various accesses are classed (110) in a first category of urgent packets (*Qᵤ*) and in a second category of non-urgent packets ( *Q_{n_u}*)*,* a packet being classed in the first category if it belongs to a stream whose mean throughput calculated over a time window is greater than a predetermined threshold value (*R_{Th}*);
- the packets of the first category form the subject of a first scheduling (120) and of an allocation of the said resources according to this first scheduling (125), and then the packets of the second category form the subject of a second scheduling (130) and of an allocation of the remaining resources according to this second scheduling (135).

2. Method of scheduling packets in a multi-access telecommunication system sharing a plurality of transmission resources, **characterized in that**
- the packets relating to the various accesses are classed (110) in a first category of urgent packets (*Qᵤ*) and in a second category of non-urgent packets ( *Q_{n_u}*)*,* a packet being classed in the first category if its time to live (TTL) is less than a predetermined threshold value (*Th*) and to the second category otherwise;
- the packets of the first category form the subject of a first scheduling (120) and of an allocation of the said resources according to this first scheduling (125), and then the packets of the second category form the subject of a second scheduling (130) and of an allocation of the remaining resources according to this second scheduling (135).

3. Scheduling method according to Claim 2, **characterized in that** different threshold values ( *Th*₁,...,*Th_{N}*) are provided for various service classes of the users of the system, a packet belonging to a service class (*Cₙ*) being classed in the first category if its time to live (TTL) is less than the threshold value associated with this class.

4. Scheduling method according to one of the preceding claims, **characterized in that** the first and second schedulings are performed according to one and the same packet scheduling method.

5. Scheduling method according to Claim 4, **characterized in that** the said same scheduling method is of the "*Maximum Channel to Interference ratio*" type or of the "*Proportional Fairness*" type.

6. Scheduling method according to one of Claims 1 to 3, **characterized in that** the first and second schedulings are performed according to separate packet scheduling methods.

7. Scheduling method according to Claim 6, **characterized in that** the first scheduling is performed according to a scheduling method of "*Earliest* Deadline *First*" type and that the second scheduling is performed according to a scheduling method of the "*Maximum Channel to Interference ratio*" type.

8. Scheduling method according to Claim 6, **characterized in that** the first scheduling is performed according to a scheduling method of "*Earliest Deadline First*" type and that the second scheduling is performed according to a scheduling method of the "*Proportional Fairness*" type.

## Patentansprüche

1. Verfahren zur Reihung von Paketen in einem Vielfachzugriff-Telekommunikationssystem, in dem eine Mehrzahl von Übertragungsressourcen geteilt werden, wobei:
- die Pakete bezüglich verschiedener Zugriffe klassifiziert werden (110) in eine erste Kategorie von dringenden Paketen (Qᵤ) sowie in eine zweite Kategorie von nicht dringenden Paketen (Q_{n_u}), wobei ein Paket in die erste Kategorie klassifiziert wird, wenn es zu einem Strom gehört, dessen mittlere Rate, die in einem Zeitfenster berechnet wird, größer ist als ein vorbestimmter Schwellenwert (R_{Th}), und andernfalls in die zweite Kategorie;
- die Pakete der ersten Kategorie Gegenstand einer ersten Reihung (120) und einer Zuordnung der Ressourcen gemäß dieser ersten Reihung sind (125), und dann die Pakete der zweiten Kategorie Gegenstand einer zweiten Reihung (130) und einer Zuordnung der verbleibenden Ressourcen gemäß dieser zweiten Reihung (135) sind.

2. Verfahren zur Reihung von Paketen in einem Vielfachzugriff-Telekommunikationssystem, in dem eine Mehrzahl von Übertragungsressourcen geteilt werden, wobei:
- die Pakete bezüglich verschiedener Zugriffe klassifiziert werden (110) in eine erste Kategorie von dringenden Paketen (Qᵤ) sowie in eine zweite Kategorie von nicht dringenden Paketen (Q_{n_u}), wobei ein Paket in die erste Kategorie klassifiziert wird, wenn seine Lebenszeit (TTL) kleiner ist als ein vorbestimmter Schwellenwert (Th), und andernfalls in die zweite Kategorie;
- die Pakete der ersten Kategorie Gegenstand einer ersten Reihung (120) und einer Zuordnung der Ressourcen gemäß dieser ersten Reihung sind (125), und dann die Pakete der zweiten Kategorie Gegenstand einer zweiten Reihung (130) und einer Zuordnung der verbleibenden Ressourcen gemäß dieser zweiten Reihung (135) sind.

3. Verfahren zur Reihung nach Anspruch 2, **dadurch gekennzeichnet, dass** verschiedene Schwellenwerte (Th₁,....,Th_{N}) für verschiedene Dienstklassen der Benutzer des Systems vorgesehen sind, wobei ein Paket zu einer Dienstklasse (Cₙ) gehört, die in die erste Kategorie klassifiziert ist, wenn seine Lebenszeit (TTL) kleiner ist als der dieser Klasse zugeordnete Schwellenwert.

4. Verfahren zur Reihung gemäß einem der vorhergehenden Ansprüche, **dadurch gekennzeichnet, dass** die erste und die zweite Reihung gemäß ein und demselben Paketreihungsverfahren durchgeführt werden.

5. Verfahren zur Reihung nach Anspruch 4, **dadurch gekennzeichnet, dass** das ein und dasselbe Reihungsverfahren vom Typ "maximum Channel to Interference ratio" oder vom Typ "Proportional Fairness" ist.

6. Verfahren zur Reihung nach einem der Ansprüche 1 bis 3, **dadurch gekennzeichnet, dass** die erste und die zweite Reihung gemäß verschiedenen Paketreihungsverfahren durchgeführt werden.

7. Verfahren zur Reihung nach Anspruch 6, **dadurch gekennzeichnet, dass** die erste Reihung gemäß einem Reihungsverfahren vom Typ "Earliest Deadline First" durchgeführt wird, und dass die zweite Reihung gemäß einem Reihungsverfahren vom Typ "Maximum Channel to Interference ratio" durchgeführt wird.

8. Verfahren zur Reihung nach Anspruch 6, **dadurch gekennzeichnet, dass** die erste Reihung gemäß einem Reihungsverfahren vom Typ "Earliest Deadline First" durchgeführt wird, und dass die zweite Reihung gemäß einem Reihungsverfahren vom Typ "Proportional Fairness" durchgeführt wird.
